# FASCICULE DE BREVET EUROPEEN

(11) **EP 3 669 117 B1**
(45) Date de publication et mention de la délivrance du brevet: **09.06.2021**
(21) Numéro de dépôt: 18789680.8
(22) Date de dépôt: 26.10.2018
(51) Int. Cl.: F21S 8/04, F21V 21/02, F21V 21/03, F16B 7/18, F16B 35/00, F21W 131/105

(54) **SYSTÈME DE MONTAGE D'ÉCLAIRAGE OPÉRATOIRE AU PLAFOND AVEC VIS DE PRESSION**
SYSTEM ZUR MONTAGE VON OP-LEUCHTEN AN DER DECKE MIT STELLSCHRAUBEN
SYSTEM FOR MOUNTING SURGICAL LIGHTIING ON THE CEILING WITH SET SCREWS

(30) Priorité: 26.10.2017 FR 1701116
(43) Date de publication de la demande: 24.06.2020
(73) Titulaire: Maquet SAS, 45160 Ardon (FR)
(72) Inventeur: SENELIER, Gregory, 45160 Ardon (FR); GENEVRIERE, David, 45160 Ardon (FR)
(74) Mandataire: Zacco GmbH
(86) Numéro de dépôt international: PCT/EP2018/079451
(87) Numéro de publication internationale: WO 2019/081731

(56) Documents cités:
- FR-A1- 2 876 175
- KR-B1- 101 711 078
- US-A- 6 030 103
- US-A1- 2003 160 142
- US-B2- 6 817 585

## Description

La présente divulgation concerne un système de montage d'un éclairage opératoire au plafond d'un bloc opératoire, ledit système comprenant :
- un tube d'ancrage pour ancrer l'éclairage opératoire au plafond du bloc opératoire, le tube d'ancrage comprenant une pluralité de perçages de fixation ;
- une suspension d'éclairage opératoire adaptée à porter l'éclairage opératoire et à être fixée au tube d'ancrage, la suspension comportant une section de fixation avec une pluralité de taraudages de fixation ; et
- une pluralité de vis de fixation comprenant un corps fileté et une tête de serrage, chaque vis de fixation étant conçue pour être vissée avec son corps fileté dans l'un des taraudages de fixation et pour être reçue avec sa tête de serrage dans l'un des perçages de fixation.

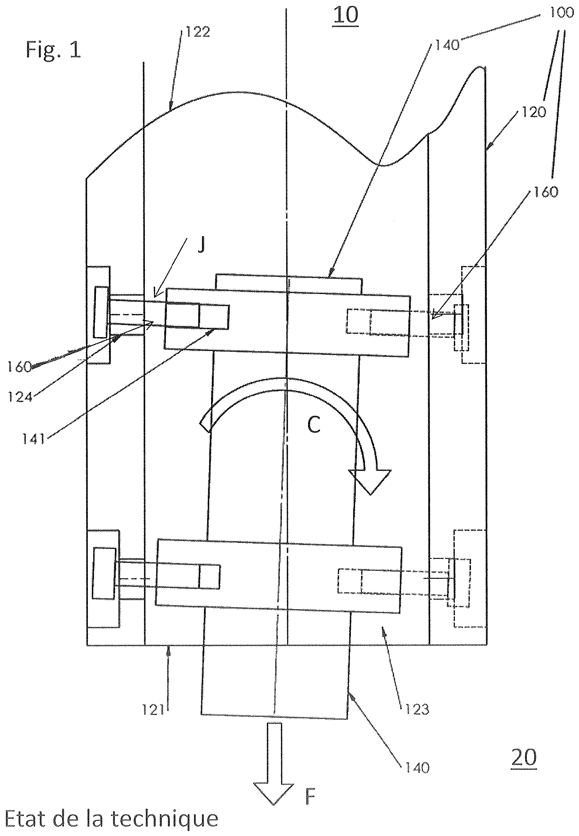

Un tel système de montage est connu. La Fig. 1 montre ce système 100 à l'état monté lorsqu'il est utilisé pour la fixation d'un éclairage opératoire au plafond d'un bloc opératoire. Le système 100 comprend un tube d'ancrage 120, une suspension d'éclairage opératoire 140 et six vis de fixation 160, dont uniquement quatre sont représentées. Le tube d'ancrage 120 est agencé dans le plafond 10 d'une salle 20 d'un bloc opératoire. Le tube d'ancrage 120 est creux. Il dispose d'un passage 121 débouchant dans une extrémité supérieure 122 côté plafond 10 et dans une extrémité inférieure 123 côté salle 20. Le tube d'ancrage 120 est pourvu de six perçages de fixation 124 accueillant chacun l'une des vis de fixation 160.

La suspension d'éclairage opératoire 140 est insérée dans le passage 121. Elle dispose de six taraudages de fixation 141. Les vis de fixation 160 sont vissées dans les taraudages de fixation 141. Ainsi, la suspension d'éclairage opératoire 140 est fixée au tube d'ancrage 120.

Les vis de fixation 160 sont des vis d'assemblage. Elles travaillent donc en traction et peuvent casser à la fatigue lorsqu'utilisées avec de fortes charges.

Plus précisément, lors de l'application d'une force considérable F (cf. la flèche sur la Fig. 1) à la suspension d'éclairage opératoire 140, le jeu J entre la suspension d'éclairage opératoire 140 et le tube d'ancrage 120 fait que la suspension d'éclairage opératoire 140 peut osciller dans le tube 120, cf. la flèche C sur la Fig. 1. De cette façon, les vis 160, qui sont dimensionnées pour l'effort en cisaillement, sont allongées. Cela provoque le battement de la suspension 140 dans le tube 120. Le jeu de la suspension d'éclairage opératoire 140 est gênant pour le personnel opératoire. Afin d'éliminer le jeu J, celui-ci fait donc appel à un opérateur de maintenance. L'opérateur pense que le jeu J est dû à un desserrage des vis 160. Il tente donc de les resserrer, ce qui entraine leur rupture.

Un tel système selon le préambule de la revendication 1 est divulgué dans le document US 6 030 103 A.

Un but de la divulgation est donc d'améliorer ce système de montage connu. Il s'agit notamment de réaliser un système permettant un montage plus fiable et plus stable d'un éclairage opératoire.

Selon la divulgation, ce but est atteint avec un système tel que défini ci-dessus, dans lequel chaque vis de fixation est une vis de pression prévue pour assurer la fixation de la suspension d'éclairage opératoire au tube d'ancrage par sollicitation de compression. En remplaçant les vis d'assemblage par des vis de pression, les vis de fixation ne subissent plus de traction à l'état monté, mais travaillent en cisaillement pur. Il n'y a donc plus d'allongement de vis et plus de rupture de vis possible. Ainsi, le système de montage est plus fiable et plus stable.

Selon certains modes de réalisation, le système selon la divulgation comprend une, plusieurs ou toutes les caractéristiques suivantes, dans toutes les combinaisons techniquement possibles :
- le corps fileté de chaque vis de pression a un filetage à gauche ;
- le diamètre de la tête de serrage de chaque vis de pression est inférieur au diamètre du corps fileté, de manière à définir un épaulement d'appui à l'interface entre la tête de serrage et le corps fileté ;
- une vis anti-desserrage pour chaque vis de pression et servant à empêcher le desserrage de la vis de pression à l'état monté ;
- un taraudage est pratiqué dans la tête de serrage de chaque vis de pression, le taraudage étant adapté à accueillir l'une des vis anti-desserrage ;
- un capuchon de protection pour chaque vis anti-desserrage, le capuchon de protection étant notamment équipé d'une rondelle et/ou d'un rabat de fermeture du capuchon ;
- la suspension d'éclairage opératoire comprend un axe de fixation et une collerette solidarisée à l'axe de fixation et l'entourant ;
- la collerette comprend la pluralité de taraudages de fixation dans des passages respectifs pratiqués dans la collerette ;
- l'axe de fixation comprend un tuyau allongé adapté à être positionné au moins en partie dans le tube d'ancrage ;
- la suspension comprend un axe de fixation et une pluralité de collerettes solidarisées à l'axe de fixation et agencées à distance l'une de l'autre le long de celui-ci ;
- les collerettes comprennent chacune une pluralité de taraudages de fixation.

La divulgation concerne également une monture pour accrocher un éclairage opératoire au plafond d'un bloc opératoire, la monture étant un assemblage du système de montage défini ci-dessus, dans lequel assemblage la section de fixation de la suspension d'éclairage opératoire est insérée dans le tube d'ancrage et fixée audit tube à l'aide des vis de pression, chaque vis de pression étant serrée en compression contre le tube d'ancrage.

Chaque perçage de fixation peut accueillir une tête de serrage et une vis anti-desserrage vissée dans la tête de serrage. Dans ce cas de figure, chaque perçage de fixation peut en outre accueillir un capuchon de protection accueillant l'extrémité de serrage de la vis anti-desserrage.

La monture peut en outre comprendre l'une, plusieurs ou toutes les caractéristiques suivantes, dans toutes les combinaisons techniquement possibles :
- les vis de pression sont orientées radialement vers l'extérieur par rapport à la suspension d'éclairage opératoire ;
- les vis de pression s'étendent chacune entre un perçage de fixation du tube d'ancrage et un taraudage de fixation de la suspension d'éclairage opératoire ;
- les vis de pression empêchent ainsi un mouvement latéral ou en rotation de la suspension par rapport au tube d'ancrage et sont aptes à supporter, au moins en partie, le poids de suspension d'un éclairage opératoire ;
- chaque vis anti-desserrage dispose d'une extrémité filetée vissée dans un taraudage de sa vis de pression pour ainsi bloquer la vis de pression dans sa position, et d'une tête à diamètre supérieur de celui de l'extrémité filetée et positionnée dans un lamage de l'un des perçages de fixation dans le tube d'ancrage.

La présente divulgation concerne aussi un ensemble comprenant une monture telle que définie ci-dessus et un éclairage opératoire, l'éclairage opératoire comportant un bras articulé à l'aide duquel il est accroché à la suspension.

La divulgation se réfère aussi à un procédé d'assemblage d'une monture telle que définie ci-dessus, comprenant les étapes consistant à :
a) Visser chaque vis de pression au fond de l'un des taraudages de fixation de la suspension d'éclairage opératoire de façon à dissimuler les vis de pression complètement à l'intérieur de la suspension d'éclairage opératoire ;
b) Insérer la section de fixation de la suspension d'éclairage opératoire dans le tube d'ancrage jusqu'à ce que les taraudages de fixation se situent au droit des perçages de fixation ;
c) Mise en prise d'un outil de vissage avec une tête de serrage d'une vis de pression par insertion de l'outil de vissage dans un taraudage de fixation en traversant le perçage de fixation associé ;
d) Dévissage de la vis de pression avec l'outil de vissage jusqu'à ce que celle-ci se trouve en appui et compressée contre le tube d'ancrage ; et
e) Répéter les étapes c) et d) pour chaque vis de pression afin de compenser tout jeu entre la suspension d'éclairage opératoire et le tube d'ancrage ;
le procédé comprenant notamment en outre les étapes additionnelles consistant à :
f) Placer un capuchon de protection dans chaque perçage de fixation ;
g) Visser une vis anti-desserrage dans chaque tête de serrage au travers du capuchon de protection ; et
h) Placer un rabat sur le capuchon de protection afin de dissimuler la vis anti-desserrage.

La divulgation sera mieux comprise à l'étude de la description détaillée et non-limitative qui suit, en référence aux dessins annexés, parmi lesquels :
La Fig. 1 est une illustration en coupe longitudinale d'un système de montage d'éclairage opératoire selon l'état de la technique ;
La Fig. 2 est une vue en perspective et en coupe longitudinale d'un système de montage d'éclairage opératoire selon la divulgation qui est en train d'être assemblé pour former une monture pour accrocher un éclairage opératoire au plafond d'un bloc opératoire ;
La Fig. 3 est une vue en perspective d'une vis de pression utilisée dans le système de montage de la Fig. 2 ; et
La Fig. 4 est une vue en perspective d'un outil de serrage selon la divulgation permettant de serrer la vis de pression montrée à la Fig. 3.

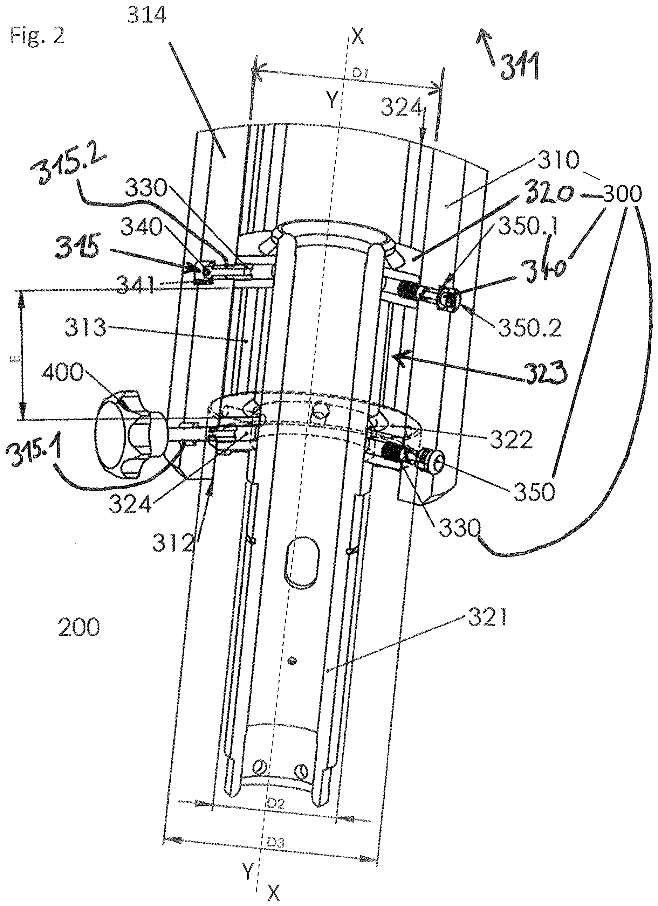

La Figure 2 est une vue d'ensemble d'une monture 200 selon la divulgation dans un état partiellement assemblé. La monture 200 est assemblée à partir d'un système de montage 300. Le système de montage 300 est un jeu de pièces détachées. Il comprend un tube d'ancrage 310, une suspension d'éclairage opératoire 320 et une pluralité de vis de fixation 330.

Le tube d'ancrage 310 est prévu pour être solidarisé au plafond d'un bloc opératoire. A cette fin, il dispose d'une extrémité supérieure d'ancrage 311. Il comprend également une extrémité inférieure d'insertion 312. Une cavité 313 s'étend entre les deux extrémités 311 et 312. Cette cavité est bordée par une paroi cylindrique 314. Le tube d'ancrage 310 a un axe longitudinal principal X-X et un diamètre interne D1.

La paroi cylindrique 314 est munie d'une pluralité de perçages de fixation 315. Chaque perçage de fixation 315 traverse la paroi cylindrique 314 radialement. En l'occurrence, il y a six perçages de fixation qui sont agencés en deux groupes de trois (la Figure 2 ne montre que deux des six perçages). Les trois perçages de fixation 315 d'un groupe se situent axialement à la même hauteur. Ils sont distribués, notamment de façon équidistante, le long du pourtour de la paroi cylindrique 314. Les deux groupes de trois sont distants l'un de l'autre le long de l'axe principal X-X du tube d'ancrage 310. On notera qu'on peut bien sûr envisager un autre nombre de perçages de fixation 315 qui peuvent être regroupés de manière différente sur la paroi cylindrique 314.

Chaque perçage de fixation 315 a un lamage 315.1. Celui-ci est situé du côté externe de la paroi cylindrique 314. Chaque lamage 315.1 débouche dans un alésage 315.2 qui débouche à son tour dans la cavité 313.

La suspension d'éclairage opératoire 320 comprend un axe de fixation 321 avec un diamètre externe D2 inférieur au diamètre interne D1 du tube d'ancrage 310. L'axe 321 a un axe principal longitudinal Y-Y qui, à l'état monté, est confondu avec l'axe X-X du tube d'ancrage 310. La suspension d'éclairage opératoire 320 comporte en outre deux collerettes 322 qui entourent l'axe de fixation 321. Les collerettes 322 peuvent notamment être solidarisées à l'axe de fixation 321, par exemple par soudage. Il est bien sûr envisageable de ne prévoir qu'une seule collerette 322. Les deux collerettes 322 sont séparées l'une de l'autre d'une distance E le long de l'axe Y-Y. Le diamètre externe D3 des collerettes 322 est sensiblement égal au diamètre interne D1 du tube d'ancrage 310. Les collerettes 322 définissent ensemble une section de fixation 323 de la suspension d'éclairage opératoire 320 au tube d'ancrage 310. Chaque collerette 322 est pourvue d'une pluralité de taraudages de fixation 324. Chaque collerette 322 peut notamment avoir trois taraudages de fixation 324 (la Figure 2 ne montre qu'un seul taraudage 324 pour chaque collerette 322). Les taraudages 324 sont distribués, notamment de façon équidistante, le long du pourtour de la collerette 322 associée. Les taraudages 324 ont vocation à être chacun en face d'un perçage 315 à l'état monté, tel qu'on le voit à la Figure 2.

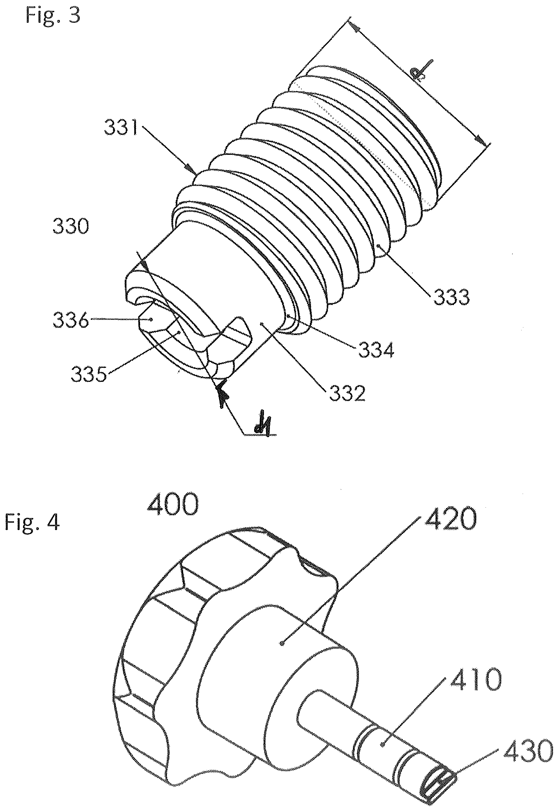

Selon la divulgation, les vis de fixation 330 sont des vis de pression. La Figure 3 montre en détail l'une de ces vis de pression 330. Chaque vis de pression 330 comprend un corps fileté 331 et une tête de serrage 332. Le corps fileté 331 de chaque vis de pression 330 peut notamment avoir un filetage à gauche 333.

En outre, le diamètre d1 de la tête de serrage 332 de chaque vis de pression 330 est inférieur au diamètre d2 du corps fileté 331, de manière à définir un épaulement d'appui 334 à l'interface entre la tête de serrage 332 et le corps fileté 331.

Un taraudage 335 peut être pratiqué dans la tête de serrage 332 de chaque vis de pression 330.

La tête de serrage 332 peut également disposer d'une empreinte 336, par exemple d'une fente, pour un outil de vissage 400, cf. la Figure 4.

De manière avantageuse, le système de montage 300 selon la divulgation peut en outre comprendre une vis anti-desserrage 340 pour chaque vis de pression 330. Le système 300 peut également inclure un capuchon de protection 350 pour chaque vis anti-desserrage 340. Le capuchon de protection 350 peut être équipé d'une rondelle 350.1 et d'un rabat de fermeture 350.2.

L'outil de vissage 400 pour visser les vis de pression 330 illustré à la Fig. 4 comprend une tige de serrage 410 et une poignée 420. L'extrémité libre 430 de la tige de serrage 410 a une forme complémentaire à l'empreinte 336 prévue dans chaque vis de pression 330. Dans l'exemple illustré, l'extrémité libre 430 a la forme d'une lame plate, qui est complémentaire de la fente 336 de chaque vis de pression 330.

On va maintenant décrire comment assembler une monture 200 à l'aide des pièces détachées du système de montage 300 selon la divulgation.

On commence par visser les six vis de pression 330 au fond des taraudages 324 de la suspension 320. Quand cette opération est terminée, les vis de pression 330 sont complètement dissimulées dans la suspension 320. Les vis de pression 330 ne dépassent donc pas du périmètre extérieur des collerettes 322. Cet état est visible au bas de la Figure 2.

La suspension 320 est alors amenée dans le tube d'ancrage 310, en l'introduisant dans la cavité 313 par l'extrémité inférieure d'insertion 312. Puis l'outil 400, traversant un perçage 315, (cf. la Figure 2 en bas) permet de dévisser chaque vis de pression 330 jusqu'à ce que celle-ci soit en appui contre le tube d'ancrage 310 avec son épaulement 334. Le filetage 333 étant à gauche, il faut tourner l'outil 400 dans le sens antitrigonométrique pour amener les vis de pression 330 vers l'opérateur. A la fin de cette opération, les têtes de serrage 332 se trouvent alors dans les perçages 315.

On notera que les six vis de pression 330 sont dévissés les unes après les autres, puis serrés en compression contre le tube d'ancrage 310 pour compenser tout jeu.

Puis, un capuchon 350 équipé d'une rondelle 350.1 est placé dans chaque lamage 315.1. Une vis anti-desserrage 340 est vissée à travers chaque capuchon 350 et serrée dans chacune des vis de pression 330, empêchant tout desserrage de celles-ci.

Les rabats 350.2 des capuchons 350 viennent fermer les lamages 315.1, cachant les vis anti-desserrage 340.

A l'état assemblé de la monture 200, les vis de pression 330 s'étendent notamment entre les alésages 315.2 dans le tube d'ancrage 310 et les taraudages de fixation 324 des collerettes 322. Aussi, la monture 200 est en mesure de supporter un poids de manière stable dans la direction axiale/verticale. Le poids d'un éclairage accroché à la monture 200 s'applique au tube d'ancrage 310 à travers les collerettes 322 et les vis de pression 330. Cela assure également une stabilité latérale et en rotation afin d'empêcher une oscillation de la suspension 320. Les vis de pression 330 sont généralement comprimées vers le bas contre les alésages 315.2 dans le tube d'ancrage 310 par le poids de la suspension 320, et par le poids d'un éclairage et/ou d'un bras d'éclairage, si présent. Des agencements dans lesquels les taraudages 324 sont prévus au niveau de la suspension 320 dans des structures autres que des collerettes 322 sont également envisageables.

On notera que le système de montage et la monture selon la divulgation peuvent faire l'objet de nombreuses modifications sans sortir de la portée de la divulgation. On peut notamment penser aux modifications suivantes :
- Les vis de pression 330 peuvent être munies d'un filetage à droite ;
- On peut faire varier l'empreinte d'outil des vis de pression 330 ;
- Les capuchons 350 et les vis anti-desserrage 340 sont facultatifs ;
- On peut prévoir un frein filet au lieu d'une vis anti-desserrage 340 ;
- Le nombre de vis de pression 330 peut varier.

Le système de montage et la monture selon la divulgation ont en particulier les avantages suivants :
- Grâce au montage en compression, un allongement et donc une fragilisation des vis de fixation est exclu ;
- Le montage en compression permet également de supprimer tout jeu entre la suspension et le tube d'ancrage ;
- En prévoyant les vis anti-desserrage, on empêche tout desserrage des vis de pression. Par conséquent, on peut se passer de la maintenance qui est nécessaire pour la monture de l'état de la technique selon la Figure 1 et qui consiste à resserrer les vis de fixation ;
- Les capuchons de protection empêchent des saletés d'entrer dans la monture, ce qui facilite le nettoyage.

## Revendications

1. Système (300) de montage d'un éclairage opératoire au plafond d'un bloc opératoire, ledit système comprenant :
• Un tube d'ancrage (310) pour ancrer l'éclairage opératoire au plafond du bloc opératoire, le tube d'ancrage (310) comprenant une pluralité de perçages de fixation (315) ;
• Une suspension d'éclairage opératoire (320) adaptée à porter l'éclairage opératoire et à être fixée au tube d'ancrage (310), la suspension (320) comportant une section de fixation (323) avec une pluralité de taraudages de fixation (324) ; et
• Une pluralité de vis de fixation (330) comprenant un corps fileté (331) et une tête de serrage (332), chaque vis de fixation (330) étant conçue pour être vissée avec son corps fileté dans l'un des taraudages de fixation (324) et pour être reçue avec sa tête de serrage (332) dans l'un des perçages de fixation (315),
**caractérisé en ce que** chaque vis de fixation est une vis de pression (330) prévue pour assurer la fixation de la suspension d'éclairage opératoire (320) au tube d'ancrage (310) par sollicitation de compression.

2. Système (300) selon la revendication 1, dans lequel le corps fileté (331) de chaque vis de pression a un filetage à gauche (333).

3. Système (300) selon la revendication 1 ou 2, dans lequel le diamètre (d1) de la tête de serrage (332) de chaque vis de pression est inférieur au diamètre (d2) du corps fileté (331), de manière à définir un épaulement d'appui (334) à l'interface entre la tête de serrage et le corps fileté.

4. Système (300) selon l'une quelconque des revendications précédentes, comprenant en outre une vis anti-desserrage (340) pour chaque vis de pression (330) et servant à empêcher le desserrage de la vis de pression à l'état monté.

5. Système (300) selon la revendication 4, dans lequel un taraudage (335) est pratiqué dans la tête de serrage (332) de chaque vis de pression, le taraudage étant adapté à accueillir l'une des vis anti-desserrage (340).

6. Système (300) selon l'une des revendications 4 ou 5, comprenant en outre un capuchon de protection (350) pour chaque vis anti-desserrage, le capuchon de protection étant notamment équipé d'une rondelle (350.1) et/ou d'un rabat (350.2) de fermeture du capuchon.

7. Système selon l'une quelconque des revendications précédentes, dans lequel :
- la suspension d'éclairage opératoire (320) comprend un axe de fixation (321) et une collerette (322) solidarisée à l'axe de fixation (321) et l'entourant ;
- la collerette (322) comprend la pluralité de taraudages de fixation (324) dans des passages respectifs pratiqués dans la collerette ; et
- l'axe de fixation (321) comprend un tuyau allongé adapté à être positionné au moins en partie dans le tube d'ancrage (310).

8. Système selon l'une quelconque des revendications précédentes, dans lequel :
- la suspension (320) comprend un axe de fixation (321) et une pluralité de collerettes (322) solidarisées à l'axe de fixation (321) et agencées à distance l'une de l'autre le long de celui-ci ; et
- les collerettes (322) comprennent chacune une pluralité de taraudages de fixation (324).

9. Monture (200) pour accrocher un éclairage opératoire au plafond d'un bloc opératoire, la monture étant un assemblage du système de montage (300) selon l'une quelconque des revendications précédentes, dans lequel assemblage la section de fixation (323) de la suspension d'éclairage opératoire est insérée dans le tube d'ancrage (310) et fixée audit tube à l'aide des vis de pression (330), chaque vis de pression (330) étant serrée en compression contre le tube d'ancrage.

10. Monture (200) selon la revendication 9, la monture étant un assemblage du système de montage selon la revendication 4, dans laquelle chaque perçage de fixation (315) accueille une tête de serrage et une vis anti-desserrage (340) vissée dans la tête de serrage.

11. Monture (200) selon la revendication 10, chaque perçage de fixation (315) accueillant en outre un capuchon de protection (350) accueillant l'extrémité de serrage de la vis anti-desserrage.

12. Monture selon l'une quelconque des revendications 9 à 11, dans laquelle :
- les vis de pression (330) sont orientées radialement vers l'extérieur par rapport à la suspension d'éclairage opératoire (320) ;
- les vis de pression (330) s'étendent chacune entre un perçage de fixation (315) du tube d'ancrage (310) et un taraudage de fixation (324) de la suspension d'éclairage opératoire (320) ; et
- les vis de pression (330) empêchent ainsi un mouvement latéral ou en rotation de la suspension (320) par rapport au tube d'ancrage (310) et sont aptes à supporter, au moins en partie, le poids de suspension d'un éclairage opératoire.

13. Monture (200) selon la revendication 9, la monture étant un assemblage du système de montage selon la revendication 4, dans laquelle chaque vis anti-desserrage (340) dispose :
- d'une extrémité filetée vissée dans un taraudage (335) de sa vis de pression (330) pour ainsi bloquer la vis de pression (330) dans sa position ; et
- d'une tête à diamètre supérieur de celui de l'extrémité filetée et positionnée dans un lamage (315.1) de l'un des perçages de fixation (315) dans le tube d'ancrage (310).

14. Ensemble comprenant une monture selon l'une quelconque des revendications 9 à 13 et un éclairage opératoire, l'éclairage opératoire comportant un bras articulé à l'aide duquel il est accroché à la suspension (320).

15. Procédé d'assemblage d'une monture (200) selon l'une quelconque des revendications 9 à 13, comprenant les étapes consistant à :
a) Visser chaque vis de pression (330) au fond de l'un des taraudages de fixation (324) de la suspension d'éclairage opératoire de façon à dissimuler les vis de pression complètement à l'intérieur de la suspension d'éclairage opératoire (320) ;
b) Insérer la section de fixation (323) de la suspension d'éclairage opératoire dans le tube d'ancrage jusqu'à ce que les taraudages de fixation (324) se situent au droit des perçages de fixation (315) ;
c) Mise en prise d'un outil de vissage (400) avec une tête de serrage (332) d'une vis de pression par insertion de l'outil de vissage dans un taraudage de fixation (324) en traversant le perçage de fixation (315) associé ;
d) Dévissage de la vis de pression (330) avec l'outil de vissage jusqu'à ce que celle-ci se trouve en appui et compressée contre le tube d'ancrage (310) ; et
e) Répéter les étapes c) et d) pour chaque vis de pression (330) afin de compenser tout jeu entre la suspension d'éclairage opératoire et le tube d'ancrage ;
le procédé comprenant notamment en outre les étapes additionnelles consistant à :
f) Placer un capuchon de protection (350) dans chaque perçage de fixation ;
g) Visser une vis anti-desserrage (340) dans chaque tête de serrage au travers du capuchon de protection ; et
h) Placer un rabat (350.2) sur le capuchon de protection afin de dissimuler la vis anti-desserrage.

## Patentansprüche

1. System (300) zur Montage einer Operationsleuchte an der Decke eines Operationssaals, wobei das System Folgendes umfasst:
• Ein Verankerungsrohr (310) zum Verankern der Operationsleuchte an der Decke des Operationssaals, wobei das Verankerungsrohr (310) eine Vielzahl von Befestigungslöchern (315) umfasst;
• Eine Operationsleuchtenaufhängung (320), die dazu ausgelegt ist, die Operationsleuchte zu tragen und an dem Verankerungsrohr (310) befestigt zu werden, wobei die Aufhängung (320) einen Befestigungsabschnitt (323) mit einer Vielzahl von Befestigungsinnengewinden (324) aufweist; und
• Eine Vielzahl von Befestigungsschrauben (330), die einen Gewindekörper (331) und einen Anziehkopf (332) umfassen, wobei jede Befestigungsschraube (330) dazu ausgestaltet ist, mit ihrem Gewindekörper in eines der Befestigungsinnengewinde (324) eingeschraubt zu werden und mit ihrem Anziehkopf (332) in einem der Befestigungslöcher (315) aufgenommen zu werden,
**dadurch gekennzeichnet, dass** jede Befestigungsschraube eine Druckschraube (330) ist, die dazu vorgesehen ist, die Befestigung der Operationsleuchtenaufhängung (320) an dem Verankerungsrohr (310) durch Druckbeaufschlagung zu gewährleisten.

2. System (300) nach Anspruch 1, wobei der Gewindekörper (331) jeder Druckschraube ein Linksgewinde (333) aufweist.

3. System (300) nach Anspruch 1 oder 2, wobei der Durchmesser (d1) des Anziehkopfs (332) jeder Druckschraube kleiner als der Durchmesser (d2) des Gewindekörpers (331) ist, so dass eine Auflageschulter (334) an der Schnittstelle zwischen dem Anziehkopf und dem Gewindekörper definiert wird.

4. System (300) nach einem der vorhergehenden Ansprüche, das außerdem eine Verliersicherungsschraube (340) für jede Druckschraube (330) umfasst und im montierten Zustand dazu dient, das Lösen der Druckschraube zu verhindern.

5. System (300) nach Anspruch 4, wobei ein Innengewinde (335) in dem Anziehkopf (332) jeder Druckschraube ausgeführt ist, wobei das Innengewinde dazu ausgelegt ist, eine der Verliersicherungsschrauben (340) aufzunehmen.

6. System (300) nach einem der Ansprüche 4 oder 5, das zudem eine Schutzkappe (350) für jede Verliersicherungsschraube umfasst, wobei die Schutzkappe insbesondere mit einer Scheibe (350.1) und/oder einer Lasche (350.2) zum Verschließen der Kappe versehen ist.

7. System nach einem der vorhergehenden Ansprüche, wobei:
- die Operationsleuchtenaufhängung (320) eine Befestigungsachse (321) und einen Flansch (322), der fest mit der Befestigungsachse (321) verbunden ist und diese umgibt, umfasst;
- der Flansch (322) die Vielzahl von Befestigungsinnengewinden (324) in den entsprechenden Durchführungsöffnungen umfasst, die in dem Flansch ausgeführt sind; und
- die Befestigungsachse (321) ein längliches Rohr umfasst, das dazu ausgelegt ist, mindestens teilweise in dem Verankerungsrohr (310) positioniert zu werden.

8. System nach einem der vorhergehenden Ansprüche, wobei:
- die Aufhängung (320) eine Befestigungsachse (321) und eine Vielzahl von Flanschen (322) umfasst, die fest mit der Befestigungsachse (321) verbunden sind, und entlang dieser voneinander beabstandet sind; und
- die Flansche (322) jeweils eine Vielzahl von Befestigungsinnengewinden (324) umfassen.

9. Halterung (200) zum Aufhängen einer Operationsleuchte an der Decke eines Operationssaals, wobei die Halterung eine Verbindung des Systems zu Montage (300) nach einem der vorhergehenden Ansprüche ist, wobei in der Verbindung der Befestigungsabschnitt (323) der Operationsleuchtenaufhängung in das Verankerungsrohr (310) eingeführt ist und an dem Rohr mithilfe von Druckschrauben (330) befestigt ist, wobei jede Druckschraube (330) unter Druck gegen das Verankerungsrohr angezogen wird.

10. Halterung (200) nach Anspruch 9, wobei die Halterung eine Verbindung des Systems zur Montage nach Anspruch 4 ist, wobei jedes Befestigungsloch (315) einen Anziehkopf und eine in den Anziehkopf eingeschraubte Verliersicherungsschraube (340) aufnimmt.

11. Halterung (200) nach Anspruch 10, wobei jedes Befestigungsloch (315) außerdem eine Schutzkappe (350) aufnimmt, die das Anziehende der Verliersicherungsschraube aufnimmt.

12. Halterung nach einem der Ansprüche 9 bis 11, wobei:
- die Druckschrauben (330) in Bezug auf die Operationsleuchtenaufhängung (320) radial nach außen ausgerichtet sind;
- sich die Druckschrauben (330) jeweils zwischen einem Befestigungsloch (315) des Verankerungsrohrs (310) und einem Befestigungsinnengewinde (324) der Operationsleuchtenaufhängung (320) erstrecken; und
- die Druckschrauben (330) somit eine seitliche Bewegung oder Drehbewegung der Aufhängung (320) in Bezug auf das Verankerungsrohr (310) verhindern und geeignet sind das Gewicht der Operationsleuchtenaufhängung zumindest teilweise zu halten.

13. Halterung (200) nach Anspruch 9, wobei die Halterung eine Verbindung des Systems zur Montage nach Anspruch 4 ist, wobei jede Verliersicherungsschraube (340) über Folgendes verfügt:
- ein Gewindeende, das in ein Innengewinde (335) ihrer Druckschraube (330) geschraubt wird, um dadurch die Druckschraube (330) in ihrer Position zu fixieren; und
- einen Kopf mit einem Durchmesser, der größer als der des Gewindeendes ist und in einer Vertiefung (315.1) eines der Befestigungslöcher (315) in dem Verankerungsrohr (310) positioniert ist.

14. Baugruppe, die eine Halterung nach einem der Ansprüche 9 bis 13 und eine Operationsleuchte umfasst, wobei die Operationsleuchte, einen Gelenkarm umfasst, mithilfe dessen sie an der Aufhängung (320) aufgehängt wird.

15. Verfahren zum Verbinden einer Halterung (200) nach einem der Ansprüche 9 bis 13, das folgende Schritte umfasst:
a) Schrauben jeder Druckschraube (330) bis zum Ende eines der Befestigungsinnengewinde (324) der Operationsleuchtenaufhängung, um die Druckschrauben vollständig im Inneren der Operationsleuchtenaufhängung (320) zu verbergen;
b) Einführen des Befestigungsabschnitts (323) der Operationsleuchtenaufhängung in das Verankerungsrohr bis sich die Befestigungsinnengewinde (324) bei den Befestigungslöchern (315) befinden;
c) Ineingriffbringen eines Schraubwerkzeugs (400) mit einem Anziehkopf (332) einer Druckschraube durch Einführen des Schraubwerkzeugs in ein Befestigungsinnengewinde (324), indem es durch das zugehörige Befestigungsloch (315) geführt wird;
d) Lösen der Druckschraube (330) mit dem Schraubwerkzeug, bis diese an dem Verankerungsrohr (310) anliegt und gegen dieses drückt; und
e) Wiederholen der Schritte c) und d) für jede Druckschraube (330) um jegliches Spiel zwischen der Operationsleuchtenaufhängung und dem Verankerungsrohr auszugleichen;
wobei das Verfahren außerdem insbesondere folgende zusätzliche Schritte umfasst:
f) Anordnen einer Schutzkappe (350) in jedem Befestigungsloch;
g) Schrauben einer Verliersicherungsschraube (340) in jeden Anziehkopf durch die Schutzkappe; und
h) Anordnen einer Lasche (350.2) auf der Schutzkappe, um die Verliersicherungsschraube zu verbergen.

## Claims

1. System (300) for mounting surgical lighting to the ceiling of an operating theater, said system comprising:
• an anchoring tube (310) for anchoring the surgical lighting to the ceiling of the operating theater, the anchoring tube (310) comprising a plurality of attachment holes (315);
• a surgical lighting suspension (320) that is suitable for supporting the surgical lighting and for being attached to the anchoring tube (310), the suspension (320) comprising an attachment portion (323) that has a plurality of internal attachment threads (324); and
• a plurality of attachment screws (330) comprising a threaded body (331) and a tightening head (332), each attachment screw (330) being designed for the threaded body thereof to be screwed into one of the internal attachment threads (324) and for the tightening head (332) thereof to be received in one of the attachment holes (315),
**characterized in that** each attachment screw is a pressure screw (330) that is provided in order to attach the surgical lighting suspension (320) to the anchoring tube (310) by means of compressive stress.

2. System (300) according to claim 1, wherein the threaded body (331) of each pressure screw has a left-handed thread (333).

3. System (300) according to either claim 1 or claim 2, wherein the diameter (d1) of the tightening head (332) of each pressure screw is less than the diameter (d2) of the threaded body (331) so as to define a bearing shoulder (334) at the interface between the tightening head and the threaded body.

4. System (300) according to any of the preceding claims, further comprising an anti-loosening screw (340) for each pressure screw (330) that is used to prevent the pressure screw from being loosened in the mounted state.

5. System (300) according to claim 4, wherein an internal thread (335) is provided in the tightening head (332) of each pressure screw, the internal thread being suitable for accommodating one of the anti-loosening screws (340).

6. System (300) according to either claim 4 or claim 5, further comprising a protective cap (350) for each anti-loosening screw, the protective cap being in particular provided with a washer (350.1) and/or a flap (350.2) for closing the cap.

7. System according to any of the preceding claims, wherein:
- the surgical lighting suspension (320) comprises an attachment shaft (321) and a flange (322) that is secured to and encompasses the attachment shaft (321);
- the flange (322) comprises the plurality of internal attachment threads (324) in respective passages that are provided in the flange; and
- the attachment shaft (321) comprises an elongate pipe that is suitable for being positioned at least partially in the anchoring tube (310).

8. System according to any of the preceding claims, wherein:
- the suspension (320) comprises an attachment shaft (321) and a plurality of flanges (322) that are secured to the attachment shaft (321) and arranged so as to be mutually spaced along said attachment shaft; and
- the flanges (322) each comprise a plurality of internal attachment threads (324).

9. Mount (200) for hooking a surgical lighting onto the ceiling of an operating theater, the mount being an assembly of the mounting system (300) according to any of the preceding claims, in which assembly the attachment portion (323) of the surgical lighting suspension is inserted into the anchoring tube (310) and attached to said tube by means of pressure screws (330), each pressure screw (330) being tightened in compression against the anchoring tube.

10. Mount (200) according to claim 9, the mount being an assembly of the mounting system according to claim 4, wherein each attachment hole (315) accommodates a tightening head and an anti-loosening screw (340) that is screwed into the tightening head.

11. Mount (200) according to claim 10, each attachment hole (315) further accommodating a protective cap (350) that accommodates the tightening end of the anti-loosening screw.

12. Mount according to any of claims 9 to 11, wherein:
- the pressure screws (330) are oriented radially outward relative to the surgical lighting suspension (320);
- the pressure screws (330) each extend between an attachment hole (315) of the anchoring tube (310) and an internal attachment thread (324) of the surgical lighting suspension (320); and
- the pressure screws (330) thus prevent lateral or rotational movement of the suspension (320) relative to the anchoring tube (310) and are capable of at least partially supporting the suspension weight of surgical lighting.

13. Mount (200) according to claim 9, the mount being an assembly of the mounting system according to claim 4, wherein each anti-loosening screw (340)
has:
- a threaded end that is screwed into an internal thread (335) of the pressure screw (330) thereof so as to lock the pressure screw (330) in position; and
- a head that has a diameter larger than that of the threaded end and is positioned in a counterbore (315.1) of one of the attachment holes (315) in the anchoring tube (310).

14. Assembly comprising a mount according to any of claims 9 to 13 and a surgical lighting, the surgical lighting comprising an articulated arm by means of which said lighting is hooked onto the suspension (320).

15. Method for assembling a mount (200) according to any of claims 9 to 13, comprising the steps of:
a) screwing each pressure screw (330) deep inside one of the internal attachment threads (324) of the surgical lighting suspension so as to conceal the pressure screws completely inside the surgical lighting suspension (320);
b) inserting the attachment portion (323) of the surgical lighting suspension into the anchoring tube until the internal attachment threads (324) are in line with the attachment holes (315);
c) engaging a screwing tool (400) with a tightening head (332) of a pressure screw by inserting the screwing tool into an internal attachment thread (324) while passing through the associated attachment hole (315);
d) unscrewing the pressure screw (330) by means of the screwing tool until said pressure screw bears and is compressed against the anchoring tube (310); and
e) repeating steps c) and d) for each pressure screw (330) in order to compensate for any clearance between the surgical lighting suspension and the anchoring tube;
the method in particular further comprising the additional steps of:
f) placing a protective cap (350) in each attachment hole;
g) screwing an anti-loosening screw (340) into each tightening head by means of the protective cap; and
h) placing a flap (350.2) on the protective cap in order to conceal the anti-loosening screw.
